# EUROPEAN PATENT APPLICATION

(11) **EP 4 707 088 A1**
(43) Date of publication of application: **11.03.2026**
(21) Application number: 24198596.9
(22) Date of filing: 05.09.2024
(51) Int. Cl.: B60T 13/36, B60T 8/17, B60T 8/88, B60T 13/66, B60T 17/22, B60T 8/176

(54) **A DETECTION DEVICE AND A DETECTION METHOD FOR DETECTING A HOSE BURST OR BREAKAGE OF A BRAKE HOSE IN A PNEUMATIC BRAKE SYSTEM**

(71) Applicant: KB Intellectual Property GmbH & Co. KG, 82049 Pullach (DE)
(72) Inventor: Purwins, Claudia, 80809 München (DE); Balogh, Barnabas, 80809 München (DE)

(57) **Abstract**

A detection device for detecting a hose burst or breakage of a brake hose (1) in a pneumatic brake system, preferably in a brake system of a train, is disclosed comprising an ECU (7) comprising a brake controller, said detection device further comprising a pressure controller, control valves (5, 8, 9), and a brake pressure sensor (4), said pressure controller being configured to control said control valves for providing a brake pressure for operating a brake cylinder (2), said brake pressure sensor (4) being configured to detect the actual brake pressure lead to the brake cylinder (2), said brake controller being configured to receive the actual brake pressure, a demanded brake pressure, and the control valve outputs of the pressure controller, wherein the brake controller comprises an algorithm configured to determine a hose break by initiating a test function in which a predefined pressure is applied in the brake hose (1) while the inlet valve (9) and the exhaust valve (5) are closed for a predefined time and the actual pressure is detected by the brake pressure sensor (4) over the predefined time. Also a detection method is disclosed which can be carried out at any suitable occasion at e.g. any standstill of the train, e.g. at any station where the train stops since only a few seconds are needed to conduct the testing method.

## Description

The present application relates to a detection device and a detection method for detecting a hose burst or breakage or cut off of a brake hose in a pneumatic brake system of a train or the like.

At present, in train systems a hose burst of a brake hose is detected in a test mode by a reduction of a supply pressure while the compressors supplying the brake system with air pressure are not working.

The disadvantage of this method is that this method can only be performed during specific automatic brake tests which need a minimum performing time of more than 30 sec, which has to be adapted to a specific setup depending on the relay capacity, the piping infrastructure, etc.

Another possibility of a detection for detecting a hose burst or breakage of a brake hose in a pneumatic system of a train or the like is to detect a hose pressure by pressure sensors / switches or pressure control valves in comparison with a brake demand. This method has the advantage that it can detect the hose burst continuously during the regular train operation.

The disadvantage of this method however, is that due to the high power supply needed, e.g. for a relay valve, a hose burst mostly cannot be detected as the remaining measured pressure signal is quite high and depends also on choke sizes of the valves, of tolerances of the relay valve, of proof missing (detection probability is low, esp. if the switch is used since the threshold of such a switch is quite low, etc.). If e.g. the valve choke diameters are large enough, the supply air flows at a high rate to the brake cylinders. In this case a relative high remaining pressure may be present even if there is a breakage of the hose so that a breakage cannot be determined in a reliable manner.

A further method or system for checking pneumatic brakes in a train is e.g. disclosed in DE 103 37 815 A1, However, also in this system, the time for determining a failure of the brakes in a train takes very long and has to be conducted in a separate procedure.

As the breakage of a brake hose can cause significant brake force loss of the train and leads to highly increased air consumption, it would be advantageous to detect the damage of the brake pipe in time to be prepared to make the necessary measures in a very short time period as soon as possible.

Hence, it is an object of the invention to provide a detection device and a detection method for detecting a hose burst or breakage of a brake hose in a pneumatic brake system of a train or the like during a testing procedure, which can be reliably performed and provides the information about a brake hose burst in a very short time during a test function detecting a hose burst at a standstill of the train, e.g. at a station. This test function should also be applicable during service braking if conditions are safe for a short dip in pressure and can be locally accepted.

This object is achieved by a detection device and a detection method for detecting a hose burst or breakage of a brake hose in a pneumatic brake system of a train or the like according to the independent claims.

Advantageous developments of the invention are claimed in the dependent claims.

A detection device for detecting a hose burst or breakage of a brake hose in a pneumatic brake system, preferably in a brake system of a train, is disclosed, comprising: an ECU comprising a brake controller configured to monitor an actual brake pressure and to determine a demanded brake pressure, and a brake controller configured to monitor an actual brake pressure, and to determine a demanded brake pressure, a brake pressure controller configured to control valves of a brake system for providing a brake pressure for operating a brake cylinder, control valves, a brake pressure sensor configured to provide the actual brake pressure lead to the brake cylinder, said brake controller being configured to receive the actual brake, the demanded brake pressure, and the control valve outputs of the pressure controller, wherein the brake controller comprises an algorithm configured to determine a hose break by a test command on demand, preferably at a standstill of the train.

By this structure, it is possible to use existing brake systems incorporating them in the detection device according to the invention and realizing the detection of a hose burst by an algorithm as said above.

The advantage of the invention is that a hose break can be detected at each halt of the train at a station or a similar standstill time or in general on demand.

A further advantage is that the hose break can be detected quite fast, preferably within less than 20 seconds, more preferably below 7 seconds, even more preferably at less than 3 seconds.

It is independent of slightly or continuously changing target pressure, considers the dynamic behavior because of requirements of wheel slide protection (WSP) and, if necessary, effects of applied parking brake.

Preferably, the control valve is a relay valve.

Advantageously, it is independent of the supply power of a relay valve.

The brake pressure sensor is preferably configured to monitor the actual pressure after the control valves. Thereby, the actual pressure can be determined and used as an actual value to be delivered to the brake controller or the ECU where the algorithm can take this value into account.

The control valves are preferably also provided for wheel slide protection (WSP). Here, it can be an advantage, if the pressure control valves and WSP valves are the same, because in this case, there is always a pressure sensor built in after the valves to measure the actual cylinder pressure. If the pressure control comes from the relay valve and after it there is a WSP valve, it should be ensured that a cylinder pressure sensor is built in after the WSP valves.

Further, a method is disclosed for detecting a hose burst or breakage of a brake hose in a pneumatic brake system, preferably in a brake system of a train, is disclosed comprising the following steps:
- Initiating a test function on demand,
- Closing an inlet valve and an exhaust valve for a predefined testing time,
- Applying a predefined test pressure in the brake hose
- Measuring the actual brake pressure over a predefined testing time
- Determining a hose burst or cut off if a significant pressure loss is measured by the brake pressure sensor during the predefined testing time which pressure loss is higher than a predefined threshold stored in the ECU.

By this method, a hose burst can quickly be detected in less than 2-3 seconds at any suitable situation, like e.g. at any station at a standstill of the train.

Preferably, the control valves are also used in a wheel slide protection function. This ensures that not too many parts or additional elements are necessary for the hose burst detection.

The predefined test pressure lies preferably at 1 to 1,5 bar. The brake pressure sensors may preferably monitor the actual pressure after the control valves. This ensures that the actual pressure led to the brake cylinder is taken into account.

The predefined testing time lies preferably at less than 3, preferably less than 2 seconds. This ensures that the testing time does not need to be conducted only in service intervals when the train is out of operation at a service station. Rather, this test can be conducted on demand at every station or any other standstill of the train as it does not interrupt the train operation. Nevertheless, due to possible tolerances (temperature) and possible parking brake applied range from 1 to 4 bar is preferred but also a range up to 8 bar can be used. Some cars have limited braking range only to max 2bar in standstill, most have it until 4 bar, some until 6 bar and in rare cases it could be 7 or even 8 bar (above atmosphere). The detection is not restricted to higher ranges but it can be done only if these higher ranges are available in the car.

In the following, the invention will be exemplarily elucidated by an embodiment taking into account the drawing as attached.

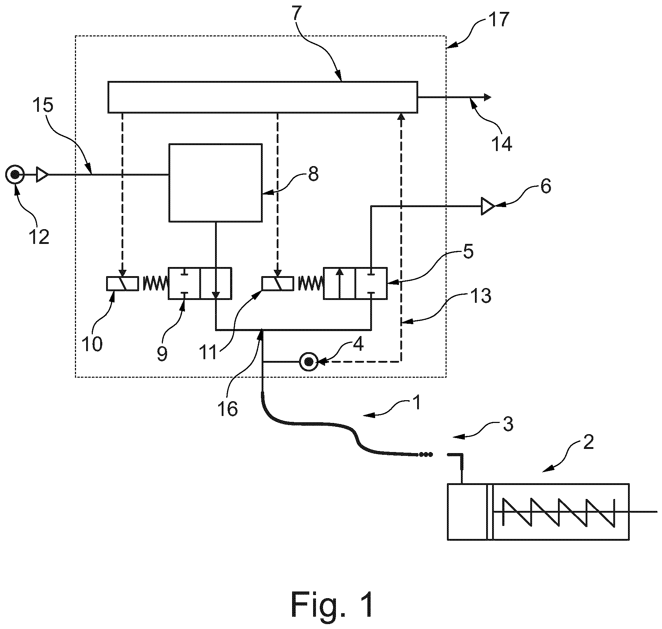

Fig. 1 shows a schematic drawing of a brake control device 17 according to an embodiment of the invention.

In the figure, a brake hose 1 is shown communicating between a relay valve 8 and a brake cylinder 2 of a pneumatic brake containing a spring within the cylinder 2 wherein the brake spring is compressed by the compressed air supplied from a compressed air source 12 so that the brake is applied or released depending on the brake pressure which is delivered through said brake hose 1.

There is an ECU 7 controlling the brake pressure and providing signals to monitor systems which are not shown here.

Said relay valve 8 provides compressed air from a compressed air source 12 to the brake cylinder 2.

There is an inlet valve 9 and an outlet or exhaust valve 5. The inlet valve 9 is disposed between the relay valve 8 and the brake cylinder 2.

From the inlet valve 9 to the outlet valve 5 is a line connecting both valves. Further, this connecting line comprises a junction 16 branching off another line which leads into the brake hose 1.

The inlet valve 9 is a 2-2 valve and is controlled by a solenoid MV in 10 which receives its signal from the ECU 7 as can be seen by a dotted line. The inlet valve 9 provides one position as shown where the compressed air is led through the inlet valve and leads the air to the brake cylinder 2 or to the exhaust valve 5. The other position of the inlet valve 9 blocks the compressed air so that no pressure is applied to the brake hose or no air is released to the exhaust valve 5.

The exhaust valve 5 is a 2-2 valve and is controlled by a solenoid MV out 11 which receives its signal from the ECU 7 as can be seen by a dotted line. The exhaust valve 5 provides one position as shown where the compressed air is blocked by the valve so that the pressure is led through the junction 16 to the brake cylinder 2 via the brake hose 1. The other position of the exhaust valve 5 releases the compressed air to an exhaust 6 so that no pressure is applied to the brake cylinder 2 via the brake hose 1.

A software algorithm is provided in the ECU that recognizes a hose break when a command at a standstill at a station is initiated to conduct a hose burst test allowing holding a test pressure for a short time.

At e.g. a station during a holding brake phase, on demand a command can be initiated for a hose break test or detection function. For that reason, it is allowed to shortly hold a predefined pressure as outlined above.

The hose break detection function closes internally the pressure supply by closing the inlet valve 9. The exhaust valve 5 is also in the closed state. Then, the internal pressure sensor 4 monitors the measured pressure after the inlet valve 9.

Due to timings, e.g. required by a wheel slide protection function (WSP function), the pressure loss by a hose break will be quite fast, in the present embodiment less than 2 seconds. Therefore, a hose break can be detected quite fast. If the pressure loss is quite fast or the original demand for compressed air increases quite fast, it can be even stopped immediately by opening the inlet valve 9 again.

To prevent a low remaining brake force on the train due to leakages on more bogies, this feature can be applied only on a part of the bogies. The entire train can be tested stepwise.

A parking brake attached to the C-Pressure can influence dynamic if parking brake is applied, but this can also be considered with an additional parking brake information. C pressure is the brake cylinder pressure for the direct brake. The parking brake pressure (PB pressure) for the parking brake works reverse (parking brake is applied if PB pressure is 0). If both brakes are at one cylinder: in order to reduce the overall forces on the brake mechanic equipment when parking brake and direct brake are applied, the parking brake force is reduced by also applying C-pressure in the parking brake chamber (so called anticompound function). Therefore, an applied parking brake adds volume to the C-Pressure control and changes the dynamic.

This test function could be used also during service braking if conditions are safe for a short dip in pressure and can be locally accepted, which only occurs if there is already a failure present and systematic wrong behavior could be excluded. The idea is to perform the test (=hold the pressure for a short time) also during service braking (running train) if special conditions are valid. For this it has to be excluded that the function is performed wrongly on all/ a lot of cars causing a measurable dip in brake force a) due to test (systematic failure), or b) due to systematic environmental conditions (e.g. a certain amount of leakage at very low temperature can be present and acceptable). Conditions must be elaborated to do a test, e.g. low frequency, only at one car etc.

In the ECU 7 an algorithm is provided which can carry out the hose burst detection.

The advantage of the invention is that this brake hose test can be conducted in a very short time, and therefore, at any suitable occasion like e.g. at any standstill at any station.

### REFERENCE LIST

- 1: brake hose
- 2: brake cylinder
- 3: cut off
- 4: internal pressure sensor
- 5: exhaust valve
- 6: exhaust line
- 7: ECU
- 8: relay valve
- 9: inlet valve
- 10: MV in
- 11: MV out
- 12: compressed air source
- 13: communication line
- 14: diagnostic line
- 15: compressed air input line
- 16: junction
- 17: brake control device

## Claims

1. A detection device for detecting a hose burst or breakage of a brake hose (1) in a pneumatic brake system, preferably in a brake system of a train, comprising: an ECU (7) comprising a brake controller, said detection device further comprising a pressure controller, control valves (5, 8, 9), and a brake pressure sensor (4), said pressure controller being configured to control said control valves for providing a brake pressure for operating a brake cylinder (2), said brake pressure sensor (4) being configured to detect the actual brake pressure lead to the brake cylinder (2), said brake controller being configured to receive the actual brake pressure, a demanded brake pressure, and the control valve outputs of the pressure controller, wherein the brake controller comprises an algorithm configured to determine a hose break by initiating a test function in which a predefined pressure is applied in the brake hose (1) while the inlet valve (9) and the exhaust valve (5) are closed for a predefined time and the actual pressure is detected by the brake pressure sensor (4) over the predefined time.

2. The detection device according to claim 1, wherein one control valve is a relay valve (7).

3. The detection device according to claim 2, wherein an inlet valve (9) and an exhaust valve (5) are provided after the relay valve (8) configured to provide a brake pressure for the brake cylinder (2) or a release pressure for releasing the brake cylinder (2).

4. The detection device according to any of the previous claims, wherein
the brake pressure sensor (4) being configured to monitor the actual pressure after the control valves (5, 8, 9).

5. The detection device according to any of the previous claims, wherein the control valves being also provided for wheel slide protection (WSP).

6. The detection device according to any of the previous claims, wherein, in case of a hose break of a specific hose connected with a specific brake cylinder (2) where the cylinder pressure of said brake cylinder starts to drop significantly, so that there will be a significant difference between a demanded pressure for the test function and the actual measured cylinder pressure, which can be signalled as a fault, so that the detection device is configured to detect a hose break.

7. A method for detecting a hose burst or breakage of a brake hose (1) in a pneumatic brake system, preferably in a brake system of a train, comprising a detection device according to any of the previous claims, the method comprising the following steps: - initiating a test function on demand by an algorithm provided in said ECU (7), applying a predefined test pressure in the brake hose (1) while closing the inlet valve (9) and the exhaust valve (5) for a predefined testing time, measuring the actual pressure by the brake pressure sensor (4) over the predefined time, determining a hose burst or cut off (3) if a significant pressure loss is measured by the brake pressure sensor (4) during the predefined testing time which pressure loss is higher than a predefined threshold stored in the ECU (7).

8. Method according to the previous claim, wherein the control valves also conduct a wheel slide protection.

9. Method according to the any of the previous claims 7 and/or 8, wherein the predefined test pressure is within a range of 0,5 to 8 bars, preferably within an range of 1 to 4 bars, more preferably 1 to 1,5 bars, and most preferred at 1 bar.

10. Method according to the any of the previous claims 7 to 9, wherein the predefined testing time is within a range of 1 to 20 seconds, preferably within an range of 2 to 7, more preferably less than 3 seconds, in particular less than 2 second.

11. Method according to the any of the previous claims 9 to 12, wherein in case of a hose break of a specific hose connected with a specific brake cylinder (2) is determined a fault is output to the ECU, and/or the fault is indicated, preferably as a hose burst of the brake hose.
